(19) Europäisches Patentamt
European Patent Office
Office européen des brevets

(11) **EP 2 019 462 B1**

(12) **EUROPÄISCHE PATENTSCHRIFT**

(45) Veröffentlichungstag und Bekanntmachung des Hinweises auf die Patenterteilung:
**23.09.2015 Patentblatt 2015/39**

(51) Int Cl.:
*G01J 11/00* (2006.01)    *H01S 3/00* (2006.01)
*H01S 3/102* (2006.01)    *H01S 3/131* (2006.01)
*H01S 3/0941* (2006.01)    *H01S 3/13* (2006.01)

(21) Anmeldenummer: **08104827.4**

(22) Anmeldetag: **22.07.2008**

(54) **Detektion des Auftretens von Mehrfachpulsen in einem LD-gepumpten Solitonlaser**

Detection of the occurrence of multiple pulses in a LD pumped soliton laser

Détection de l'apparition d'impulsions multiples dans un laser soliton pompé par LD

(84) Benannte Vertragsstaaten:
**DE FR GB**

(30) Priorität: **24.07.2007 EP 07112992**

(43) Veröffentlichungstag der Anmeldung:
**28.01.2009 Patentblatt 2009/05**

(73) Patentinhaber: **High Q Laser GmbH**
**6830 Rankweil (AT)**

(72) Erfinder:
• **Lederer, Maximilian Josef**
**A-6861 Alberschwende (AT)**
• **Calendron, Anne-Laure**
**A-6845 Hohenems (AT)**

(74) Vertreter: **Harmann, Bernd-Günther**
**Kaminski Harmann**
**Patentanwälte AG**
**Landstrasse 124**
**9490 Vaduz (LI)**

(56) Entgegenhaltungen:
**US-A1- 2003 138 006    US-B1- 6 693 927**

• **BRUZZESE R ET AL: "Experimental investigation of macropulse fluctuations in a picosecond neodymium-doped yttrium aluminium garnet laser" JOURNAL OF PHYSICS D. APPLIED PHYSICS, IOP PUBLISHING, BRISTOL, GB, Bd. 21, Nr. 12, 14. Dezember 1988 (1988-12-14), Seiten 1710-1712, XP020014578 ISSN: 0022-3727**

• **REID DT ET AL: "Light-emitting diodes as measurement devices for femtosecond laser pulses" OPTICS LETTERS, OSA, OPTICAL SOCIETY OF AMERICA, WASHINGTON, DC, US, Bd. 22, Nr. 4, 15. Februar 1997 (1997-02-15), Seiten 233-235, XP007902668 ISSN: 0146-9592**

• **KIKUCHI K: "Highly sensitive interferometric autocorrelator using Si avalanche photodiode as two-photon absorber" ELECTRONICS LETTERS, IEE STEVENAGE, GB, Bd. 34, Nr. 1, 8. Januar 1998 (1998-01-08), Seiten 123-125, XP006009086 ISSN: 0013-5194**

• **LAI M ET AL: "Multiple pulse operation of a femtosecond Ti:sapphire laser" OPTICS COMMUNICATIONS, NORTH-HOLLAND PUBLISHING CO. AMSTERDAM, NL, Bd. 142, Nr. 1-3, 1. Oktober 1997 (1997-10-01), Seiten 45-49, XP004094041 ISSN: 0030-4018**

• **Vincent Kermene ET AL: "Passive mode locking of a pulsed Nd:YAG laser using quadratic spatial solitons", Proceedings of Topical Meeting on Advanced Solid-State Laser (ASSL 2000), 13-16 Feb. 2000, Davos, Switzerland, 13 February 2000 (2000-02-13), - 16 February 2000 (2000-02-16), pages TuC7/1-4, XP55172286, Washington, D.C. DOI: 10.1364/ASSL.2000.TuC7 ISBN: 978-1-55752-628-1**

**Beschreibung**

Die Erfindung betrifft ein Erkennungsverfahren für Doppel- oder Mehrfachpulszustände in einem Ultrakurzpulslasersystem nach dem Oberbegriff des Anspruchs 1, ein Verfahren zur Vermeidung von Multipuls-Zuständen und Optimierung des Laser-Arbeitspunktes in einem solchen Ultrakurzpulslasersystem, eine Messvorrichtung zur Erkennung von Doppel- oder Mehrfachpulszustände nach dem Oberbegriff des Anspruchs 7 und ein Ultrakurzpulslasersystem.

Ultrakurzpulslasersysteme, d.h. Lasersysteme zur Erzeugung von Laserpulsen mit Pulsdauern in Femto- oder Pikosekundenbereich sind seit langem im Stand der Technik bekannt. Ein Ansatz zur Erzeugung entsprechender Pulscharakteristiken ist der modengekoppelte Betrieb im Solitonenregime, wobei Einzel- oder Mehrfachpulse pro Resonatorumlauf erzeugt werden können. Diese Betriebszustände hängen sowohl von der Dispersion und Selbstphasenmodulation - und somit der instantanen Pulsintensität - im Resonator ab, als auch von der Modulationstiefe des Modenkopplungs-Mechanismus, der verfügbaren Gain-Bandbreite und anderen Filtereffekten. Die Kombination der genannten Effekte in einem theoretischen Modell lässt es zu, die Übergänge zwischen den Betriebszuständen, zumindest unter der Annahme der adiabatischen Pulsevolution als "Master-Equation approach", vorherzubestimmen. Eine Beschreibung und Modellierung der Verhältnisse erfolgt beispielsweise in J. Opt. Soc. Am. 16 (1999), Seiten 895 - 904. Jedoch lassen sich vor allem Laser mit langen Resonatoren schlecht mit dem oben genannten Ansatz beschreiben. Die diskrete Natur der Einwirkung oben genannter Effekte auf die Pulsformung kommt hier stärker zur Geltung, was sich wiederum auf die erzielbaren Pulsparameter, wie Energie und Pulsbreite, sowie die Übergänge zwischen verschiedenen Betriebszuständen, d.h. den Einzel- oder Mehrfachpulszustand, auswirkt.

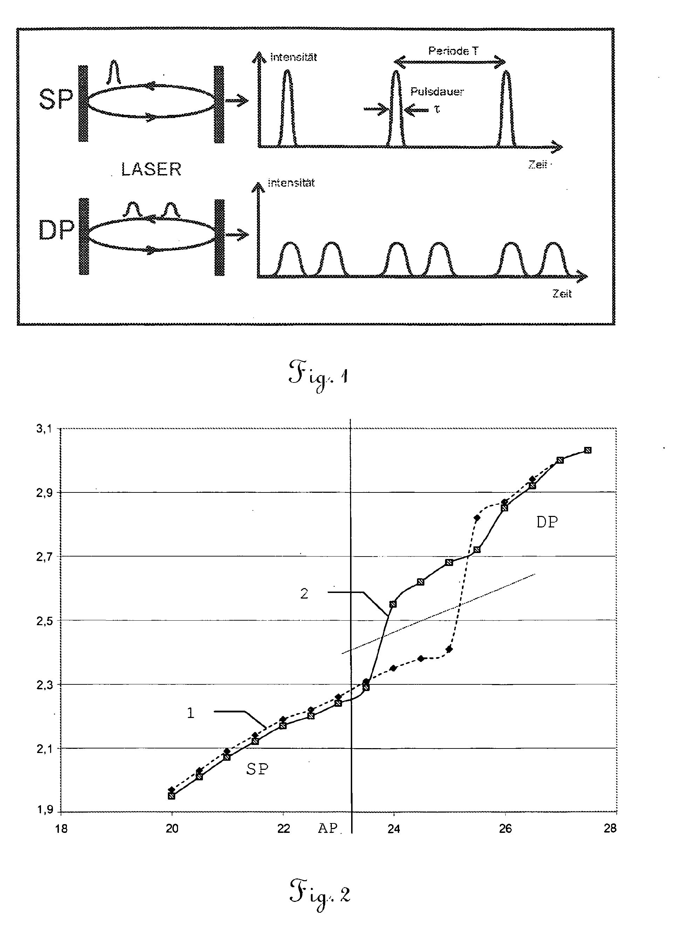

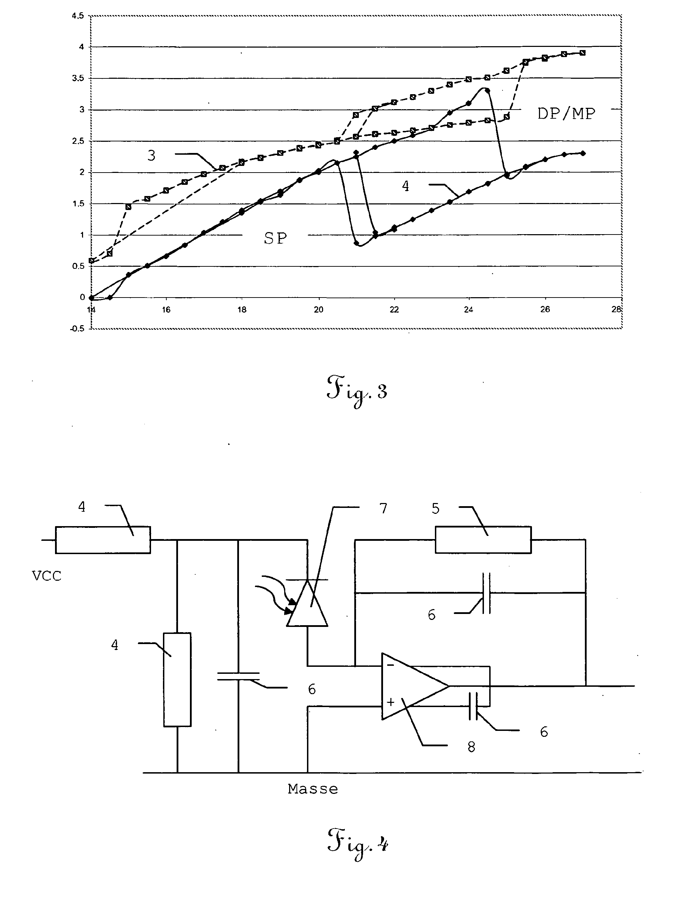

Ein typisches Verhalten eines Solitonlasers, welcher vom Einzelpuls- in den Doppelpulsbetrieb übergeht, besteht z. B. darin, dass sich bei den einzelnen Pulsen innerhalb des Resonatorumlaufs die Energie ungefähr halbiert und die Pulsbreite etwa verdoppelt. Die Übergänge zwischen den Pulszuständen zeigen auch typischerweise das in den Figuren 2 und 3 dargestellte Hystereseverhalten.

Die meisten Anwendungen von Ultrakurzpuls-Lasern benötigen jedoch den Einzelpulsbetrieb, da hier Pulsenergie und Pulsdauer optimal sind. Diese Laser haben somit im Gegensatz zu typischen Nicht-Solitonen-Lasern einen idealen Arbeitspunkt, bestenfalls einen relativ engen Arbeitsbereich, welcher nicht nur von gain-dynamischen Gesichtspunkten (gütegeschaltete Modenkopplung etc.) diktiert wird. Da in der Anwendung typischerweise auch die grösstmögliche Energie und kürzestmögliche Pulsbreite gefordert wird, muss der Arbeitspunkt des Lasers zwangsläufig sehr nahe an die Hysterese Einzel-Doppelpulszustand gelegt werden. Folglich kann der Arbeitspunkt des Lasers schon durch geringfügige Laserparameteränderungen, welche nach industrieüblichen Laufzeiten von mehr als 1000h auftreten können, in den Bereich der Einzel-Doppelpuls-Hysterese verschoben werden. Dies resultiert wiederum in einer finiten Wahrscheinlichkeit, dass der Laser nach dem Einschalten Doppelpulse emittiert.

Für die Industrietauglichkeit von Ultrakurzpuls-Lasern ist es daher sehr wichtig, einen verlässlichen, wenig komplexen und kompakten Indikator für den Pulszustand zu haben, um evtl. entsprechende Massnahmen zur Vermeidung oder Beseitigung des Doppel- oder Mehrpulszustandes einzuleiten.

Aus dem Stand der Technik sind zwei relativ aufwendige Ansätze zur Erkennung von Doppelpulsen in einem Laser bekannt. Einerseits können mittels Autokorrelation Pulse mit Separation von bis zu 100ps erkannt werden. Autokorrelatoren mit den dafür nötigen Verzögerungen sind dabei im Handel erhältlich, jedoch ist die Methode der Autokorrelation aufwendig und geräteseitig anspruchsvoll. Der andere Ansatz beruht darauf, dass Pulse mit grösserer Separation mittels sehr schneller Photodioden und Oszilloskopen detektiert werden. Auch hier sind der Aufwand und die geräteseitigen Anforderungen hoch.

Autokorrelations- und Photodiodemessungen zur Detektion von Doppelpulsen sind zum Beispiel in Lai M. et al, "Multiple pulse operation of a femtosecond Ti:sapphire laser" Optics Communications, Vol. 142, No. 1-3, 1. Oktober 1997, Seiten 45 bis 49 beschrieben. Im Experiment wurden mittels Arbeitspunktänderung (Erhöhung des Pumpstromes und Erniedrigung des Auskoppelgrades) Doppelpulszustände hervorgerufen, wobei beobachtet wurde, dass sich dabei die Autokorrelations- und Spektralbreite nicht sonderlich verändert hatten. Die Experimente zeigen auf instruktive Weise, dass die gewählten Messmethoden sehr aufwendig sind (zeitaufgelöste Autokorrelation und Pulsverlauf mittels schneller Photodiode und Oszilloskop). Desweiteren wird klar, dass sie keine eindeutige Aussage über den Pulszustand zulassen, da es Pulsseparationen gibt, welche weder vom Autokorrelator noch von der Photodiode eindeutig aufgelöst werden. Abhilfe könnte hier nur die Wahl einer Photodiode mit pikosekunden Auflösung sowie eines Autokorrelators mit langer Verzögerungsleitung schaffen. Beides ist für den industriellen Einsatz zu teuer, justageempfindlich, voluminös und unzuverlässig, da eine visuelle Begutachtung der Signale nötig wäre.

Ähnliche Detektionsmethoden werden z. B. in Buijserd A. N. et al., "CPM laser with electronic feedback" Measurement Science and Technology, Vol. 1, No. 8, 1. August 1990, Seiten 751 bis 753 sowie US 6 693 927 B1 und US 2003/0138006 A1 geoffenbart, wenngleich auch mit jeweils anderen Zielsetzungen.

Das erstgenannte Dokument beschreibt die Stabilisierung eines Colliding Pulse Mode-locked (CPM) Lasers mittels einer Regelschleife mit Photodiode. Dabei wird die Halbwertsbreite der Autokorrelationsfunktion der Pulse beobachtet, welche zusammen mit der Ausgangsleistung zur Beurteilung der Güte der Stabilisierung herangezogen wird.

Die gezeigte Anordnung eignet sich jedoch in keinster Weise, Doppel- oder Mehrfachpulszustände in einem Solitonmode-locked Laser zu erkennen und geeignete Gegenmassnahmen für diese unerwünschten Zustände einzuleiten.

US 6,693,927 B1 offenbart eine Methode zum kontrollierten Starten des Mode-locking-Betriebs eines Solitonen-Oszillators. Dies geschieht mittels einer Photodiode, welche den Mode-locking Status des Oszillators detektiert und, falls dieser nicht modengekoppelt ist, diesen über einen sog. Pumpstrom "overdrive-circuit" in den Pulsbetrieb versetzt. Dabei werden auch die im Stand der Technik hinreichend bekannten Effekte wie Q-switched Mode-locking und Doppelpulsen erwähnt und darauf hingewiesen, dass für die Detektion der Moden-kopplung auch andere Detektoren (Spektrometer, Autokorrelator, Frequenzverdoppler, etc.) verwendet werden können.

Hingegen wird in US 2003/0138006 A1 eine Laserstabilisierung beschrieben, welche mittels zusätzlichem analogen Zugriff auf ein ansonsten mit quantisierten Schritten einstellbares Lasersystem eine Feineinstellung und Regelung der Laserausgangsparameter, vor allem der Leistung, zulässt.

In "Experimental investigation of macropulse fluctuations in a picosecond neodymium-doped yttrium aluminium garnet laser",Riccardo Bruzzese et al., J. Phys. D: Appl. Phys. 21 (1988) 1710-1712, ist eine Anordnung zur Bestimmung von Pulsfluktuationen für ein Nd:YAG Lasersystem mittels der Bestimmug eines durch eine frequenzverdoppelnden Kristalls bereitgestellten Signals und der Normierung dieses Signals beschrieben.

Der vorliegenden Erfindung liegt die Aufgabe zugrunde, ein vereinfachtes und/oder verbessertes identifikationssicheres Verfahren bzw. eine entsprechende Vorrichtung zur Erkennung und Unterscheidung von Einzel- und Doppel- oder Mehrfachpulszuständen in einem Ultrakurzpulslaser im Solitonenbetrieb bereitzustellen, wobei auch eine erhöhte Robustheit sowie eine platz- und komponentenzahloptimierte Auslegung angestrebt wird.

Eine weitere Aufgabe liegt in der Bereitstellung eines Verfahrens zur Vermeidung von Multipuls-Zuständen und zur Optimierung des Laser-Arbeitspunktes.

Eine weitere Aufgabe liegt in der Bereitstellung eines hinsichtlich des Arbeitspunktes optimierten Ultrakurzpulslasersystems.

Diese Aufgaben werden erfindungsgemäss durch Ausführungsformen mit den Merkmalen der Ansprüche 1, 7 oder 13 oder der Merkmale von abhängigen Ansprüchen gelöst bzw. diese Lösungen weitergebildet.

Ein Grundgedanke der Erfindung basiert auf einer Verwendung von Signalen zweier Detektoren, aus denen auf den Betriebszustand des Lasers geschlossen wird. Hierbei wird der Umstand genutzt, daß sich sowohl der Verlauf der instantanen Pulsleistung P(t) als auch deren Scheitelwert für den Ein- und Mehrpulszustand unterscheiden, wobei sich die Scheitelwertleistung $\hat{P}$ für das Soliton dabei aus gemittelter Leistung $\langle P \rangle$ bzw. Energie $E = \int_{-\infty}^{\infty} P(t)\,dt$ , Wiederholfrequenz $f_{rep}$ und Pulsdauer $\tau_{FWHM}$ gemäß $\hat{P} = \dfrac{\langle P \rangle \cdot 0.89}{\tau_{FWHM}\, f_{rep}} = \dfrac{E \cdot 0.89}{\tau_{FWHM}}$ ergibt. So wird nun durch den einen

Detektor ein der Gesamtenergie im Resonator entsprechender Durchschnittswert aufgenommen, d.h. ein Integral über den Pulsverlauf, wohingegen das Signal des anderen Detektors auf die Spitzenintensität oder Spitzenleistung (Scheitelwert) reagiert. Beide Signale sind wohlgemerkt gemittelt und stellen den Verlauf über viele Resonatorumläufe dar, sind also im Gegensatz zu Messungen mit schnellen Photodioden und Autokorrelation frei von Zeitabhängigkeiten im Bereich der Resonatorumlaufzeit oder geringer. Aus dem Signalverhältnis kann auf den Betriebszustand bzw. das Auftreten des Doppel- oder Multipulszustandes geschlossen werden.

Im Solitonen-Laser gilt über einen weiten Arbeitsbereich die aus der Lösung der nichtlinearen Schrödingergleichung resultierende Beziehung zwischen den Parametern Energie E, Dispersion $\beta_2$, Selbstphasenmodulations-Parameter $\kappa$ und Pulsbreite $\tau_{FWHM}$ eines Solitons 1. Ordnung:

$$\tau_{FWHM} = \frac{3.526 \cdot |\beta_2|}{\kappa \cdot E} \qquad\qquad (1)$$

was beispielsweise in G. P. Agrawal, "Nonlinear Fiber Optics", Academic Press, 1989, Seite 114 dargestellt wird.

Es liegt also eine indirekte Proportionalität zwischen Pulsbreite und -energie vor. Dabei ist zu beachten, dass die Beziehung sowohl für Einzel- als auch für Multipulse gilt. Bei gleichbleibendem Gain-Sättigungsgrad, und somit gleichbleibender Gesamtenergie pro Umlauf, würde also ein Übergang vom Einzel- zum Doppelpulsregime dazu führen, dass die Einzelkomponenten des Doppelpulszustandes jeweils die halbe Energie und die doppelte Pulsbreite des Einzelpulszustandes haben. Jedoch ist zu beachten, dass sich der Gain-Sättigungsgrad bei Übergängen wegen einer Verlagerung der dynamischen Verluste im Resonator, wie in J. Opt. Soc. Am. 16 (1999), Seiten 895 - 904 dargestellt, leicht ändert, was zu einer Hysterese führt, wobei die Extraktion im Doppelpuls-Zustand effizienter ist.

Das erfindungsgemässe Erkennungsverfahren für Doppel- oder Mehrfachpulszustände in einem Ultrakurzpulslasersystem im Solitonenregime und die zugehörige Erkennungsanordnung werden nachfolgend anhand von in der Zeichnung schematisch dargestellten Ausführungsbeispielen rein beispielhaft näher beschrieben. Im einzelnen zeigen

Fig.1      die schematische Darstellung des Einzel- und Doppelpulsregimes in einem Solitonenlaser;

Fig.2      die Darstellung des Hysteresezyklus beim Übergang zwischen den Einzel- und Doppelpulsregimes;

Fig.3      die Darstellung von Einzel- und Doppelpulszustand mit Hysteresezyklen für Ein- und Zwei-Photonendetektion;

Fig.4      die schematische Darstellung einer Verstärkerschaltung zur Zwei-Photonen-Detektion;

Fig.5      eine erste Ausführungsform einer erfindungsgemässen Anordnung mit zwei Laserdetektoren;

Fig.6      eine zweite Ausführungsform einer erfindungsgemässen Anordnung mit zwei Laserdetektoren;

Fig.7      eine erste alternative oder ergänzende Ausführungsform zur erfindungsgemässen Anordnung mit einem sättigbarem Absorber;

Fig.8      die schematische Darstellung der Transmission durch einen schnellen sättigbaren Absorber und

Fig.9a-b      eine zweite alternative oder ergänzende Ausführungsform zur erfindungsgemässen Anordnung mit spektraler Pulsanalyse.

Fig.1 veranschaulicht die Einzel- und Doppelpulsregimes in einem Solitonenlaser in schematischer Darstellung. Ultrakurzpulslasersysteme zur Erzeugung von Femto- oder Pikosekundenpulsen weisen ein verstärkendes Lasermedium zur Erzeugung einer Laseremission, einen Laserresonator mit mindestens einem Resonatorspiegel eine Pumpquelle, wie z.B. eine Laserdiodenanordnung, zum Pumpen des Lasermediums auf. Das Ultrakurzpulslasersystem wird im Solitonenregime betrieben, wobei für die Laseremission ein erstes Signal $\mu$ proportional der über den Resonatorumlauf gemittelten Pulsleistung P(t) (Durchschnittleistung, Energie), z.B. mittels einer im Ein-Photon-Absorptions-Regime betriebenen Photodiode, für einen oder mehrere Pulse gemessen werden kann, wie in der Gleichung 2 definiert ist.

$$\mu \cong \frac{1}{T_R} \cdot \int_{-T_R/2}^{T_R/2} P(t)dt \qquad\qquad (2)$$

Hier bezeichnen $T_R$ die Resonatorumlaufzeit und P(t) die instantane Pulsleistung.
Im Einzelpulszustand SP läuft ein einzelner Puls innerhalb des Resonators um, wobei die Pulse einen zeitlichen Abstand $T_R$ haben. Beim Auftreten des Doppel- bzw. Mehrfachpulszustandes zerfällt der einzelne Puls in zwei oder mehr zeitlich separierte Pulse wobei diese bei der Extraktion eine niedrigere Intensität bei typischerweise etwas höherer Gesamtenergie aufweisen als der Einzelpuls. Dies bedeutet, dass sich bei den einzelnen Pulsen innerhalb des Resonatorumlaufs im Doppelpulsfall die Energie ungefähr halbiert und die Pulsbreite etwa verdoppelt. Diese Charakteristik wird erfindungsgemäß zur Unterscheidung der beiden Zustände genutzt, indem ein für die Intensität sensiver Detektor mit einem für die Gesamtenergie sensiven Detektor kombiniert wird. Anhand der detektierten Signale für Intensität und Gesamtenergie bzw. deren Verhältnis kann eine Unterscheidung des Zustands erfolgen.
In Fig.2 wird der Hysteresezyklus beim Übergang zwischen den Einzel- und Doppelpulsregimes für ein erstes Signal $\mu$ dargestellt. Hierbei bezeichnet die horizontale Achse den Strom der Pumpquelle und damit indirekt die in das verstärkende Lasermedium eingekoppelten Leistung, wohingegen die vertikale Achse die ausgekoppelte Leistung repräsentiert. Die gezeigte Hysteresekurve kann mit einem Leistungsmessgerät oder einer Photodiode gemessen werden und das erste Signal $\mu$ ist in diesem Beispiel somit das Ergebnis einer über die Resonatorumlaufszeiten gemittelten Ein-Photonen-Detektion. Die gestrichelte Kurve stellt das ansteigende Verhalten 1 des Lasers beim Übergang vom Einfachpulszustand SP zum Doppelpulszustand DP dar. Die durchgezogene Linie entspricht dem abfallenden Verhalten 2 des Lasers beim Übergang vom Doppelpulszustand DP zum Einfachpulszustand SP. Die in Gleichung (1) ausgedrückte Beziehung gilt für beide Regimes, wobei zu beachten ist, dass sich der Gain-Sättigungsgrad bei Übergängen wegen einer Verlagerung der dynamischen Verluste im Resonator leicht ändert, was zu der dargestellten Hysterese führt. Ein möglicher Arbeitspunkt AP des Ultrakurzpulslasers kann knapp unterhalb der Hysterese gewählt werden.
Fig.3 zeigt die Darstellung von Einzel- und Doppelpulszustand mit Hysteresezyklen für Ein- und Zwei-Photonendetektion. Erfindungsgemäss wird zur Erkennung von Doppelpulsen ein zweites Signal $\nu$ aufgenommen, welches

proportional dem über den Resonatorumlauf gemittelten Quadrat der Pulsleistung P(t) ist.

$$v \cong \frac{1}{T_R} \cdot \int_{-T_0/2}^{T_0/2} P^2(t)\,dt \qquad (3)$$

Dies kann beispielsweise mit einer zweiten Photodiode realisiert werden, welche Zwei-Photonen-Absorption zeigt, jedoch keine Ein-Photon Absorption. Das Zwei-Photonen-Signal 4 als zweites Signal $v$ verhält sich bei den Zustandsübergängen anders als das Ein-Photonen-Signal 3 als erstes Signal $\mu$, da die Spitzenleistung bzw. Spitzenintensität ein entscheidendes Kriterium für das Signal ist. Effektiv verringert sich die zum Zwei-Photonen-Signal 4 beitragende Spitzenleistung bzw. Spitzenintensität beim Übergang vom Einzel- in den Doppelpulszustand, wohingegen sich die Ein-Photonenenergie oder -Leistung, d.h. Durchschnittsleistung des Lasers, erhöht. Dieser Unterschied, d. h. die Auswertung beider Signale - Ein-Photon- und Zwei-Photon-Signal - ermöglicht es, die Betriebzustände des Lasers eindeutig und instantan anhand eines Vergleichs der gemessenen Signale $\mu$ und $v$ zu erkennen.

Eine als Detektor einsetzbare Photodiode wird in der Regel im Ein-Photonen-Regime betrieben, dies bedeutet, dass ein Photon mit einer Energie größer als die der Bandkante im PN-Übergang absorbiert wird und dadurch ein Elektron-Loch-Paar erzeugt. Durch die angelegte Vorspannung oder das eingebaute Potential des PN-Übergangs kommt es zum Stromfluss, falls die Photodiode mit einem geeigneten Widerstand abgeschlossen ist. Dieser Strom ist linear abhängig von der einfallenden Leistungsdichte. Falls die Photonenenergie geringer ist als die der Bandkante, gibt es keine lineare Absorption und es entsteht kein Photostrom. Andererseits besteht die Möglichkeit durch die Kaskadierung zweier Photonen über ein virtuelles Niveau ein Elektron-Loch-Paar zu erzeugen. Dieser Prozess ist zwar aufgrund der Kurzlebigkeit des virtuellen Niveaus sehr unwahrscheinlich, kann aber durch geeignet hohe Leistungsdichten verstärkt werden. Diese sog. 2-Photonen Absorption ist proportional zum Quadrat der Leistungsdichte, was bspw. in R. L. Sutherland, "Handbook of Nonlinear Optics", Marcel Dekker, 1996, Seite 498 erläutert wird.

Wie bereits erläutert emittiert der Laser im Doppel- oder Mehrfachpulszustand DP/MP zwar eine etwas höhere Durchschnittsleistung, jedoch ist aufgrund der Gleichung (1) die gesamte zum Zwei-Photonen Photostrom beitragende Spitzenleistung um einiges geringer als im Einzelpulszustand SP. Da die Zwei-Photonen-Detektion quadratisch von der Intensität abhängt, ist somit ein geringeres Signal als im Einzelpulszustand SP zu erwarten. Bei einem Übergang vom Einzelpulszustand SP zum Doppel- oder Mehrfachpulszustand DP/MP ist deshalb im Ein-Photonen-Signal ein positiver und im Zwei-Photonen-Signal ein negativer Sprung zu erwarten, was wie folgt veranschaulicht werden kann.

Der Einfachheit halber wird die Leistungshysterese vernachlässigt und angenommen, dass ein Laser einen Einzelpuls als Soliton, $\mathrm{sech}^2(t)$ mit Pulsdauer $\tau_{FWHM} = 1.763 \cdot t_0$ und Energie E emittiert. Durch eine geringfügige Parameteränderung, z. B. durch Veränderung des Pumpstroms etc., wechselt der Laser nun in den Doppelpulszustand DP. Aufgrund von Gleichungen (1) und (3) ist das Zwei-Photonen Signal für beide Fälle folglich.

$$v_1 \propto \int \left( \frac{E}{2t_0} \cdot \mathrm{sech}^2 \left( \frac{t}{t_0} \right) \right)^2 dt \quad \mathrm{bzw.} \quad v_2 \propto \int 2 \cdot \left( \frac{E}{8t_0} \cdot \mathrm{sech}^2 \left( \frac{t}{2t_0} \right) \right)^2 dt = \frac{v_1}{4} \qquad (4)$$

Allgemein ist das Zwei-Photonen Signal im Fall des Mehrfachpulszustands folglich:

$$v_n \propto \int n \cdot \left( \frac{E}{2n^2 t_0} \cdot \mathrm{sech}^2 \left( \frac{t}{nt_0} \right) \right)^2 dt = \frac{v_1}{n^2} \qquad (5)$$

In der Realität und unter Berücksichtigung der Leistungserhöhung beim Übergang wird der erwartete Unterschied bei den Zwei-Photonensignalen geringer als Faktor $n^2$ ausfallen.

Exemplarisch wurde der Hysteresezyklus eines High-Q-Laser *femtoTRAIN 2000 1040nm 20MHz* mit Ein-Photon und Zwei-Photonen-Detektion gemessen, was zum in Fig.3 dargestellten Verlauf führt. Um eine höhere Intensität zu erzeugen, wurde ca. 1% der Ausgangsleistung auf die Photodiode *Hamamatsu G1116* GaAsP-Photodiode fokussiert. Letztere hat keine lineare Absorption bei der Laserwellenlänge von 1040nm, jedoch besteht bei dieser Wellenlänge schon ein ausreichender und nützlicher Zwei-Photonen Wirkungsquerschnitt. Die Elektronik besteht aus dem in Fig.4 dargestellten einfachen Verstärker.

Die Hysteresemessungen sind Fig.3 dargestellt, wobei die gestrichelte Linie das Ein-Photonen-Signal 3 und die durchgezogene Linie das Zwei-Photonen-Signal 4 repräsentieren. Hierbei wurde das Zwei-Photonen-Signal 4 so skaliert, dass sich dieses für den Einzelpulszustand SP so gut wie möglich mit dem entsprechenden Ein-Photonen-Signal 3 deckt. Die Kurven können in verschiedene Bereiche eingeteilt werden: die untere Linie des Ein-Photonen-Signals 3 und die obere Linie des Zwei-Photonen-Signals 4 repräsentieren den Einzelpulszustand SP. Die obere Linie des Ein-Photonen-Signals 3 und die untere Linie des Zwei-Photonen-Signals 4 entsprechen dem Doppelpulszustand DP. Als ein hinreichend einfaches und eindeutiges Kriterium, die Pulszustände zu unterscheiden, kann festgelegt werden, dass bei einem Verhältnis von $|\mu\text{-}\nu|{\leq}1$ auf einen Einzelpulszustand geschlossen wird, wohingegen ein Verhältnis von $|\mu\text{-}\nu|{\geq}\text{-}1.5$ als Indikator für einen Doppel- oder Mehrfachpulszustand DP/MP betrachtet wird. Eine Auswertung der beiden Signale mittels einer einfachen Software-Routine kann dann zwischen den beiden Zuständen (SP oder DP/MP) unterscheiden.

Im allgemeinen ist der Übergang eines Lasers aus einem Pulszustand mit n Pulsen in den nächsthöheren Pulszustand mit (n+1) Pulsen mithilfe des Leistungssprungs sichtbar. Zwischen Mehrfachpulszuständen mit n Pulsen und (n+1)Pulsen erhöht sich die Durchschnittsleistung und verlängert sich die Pulsdauer. Die Differenzierung zwischen Mehrfachpulszuständen nMP und (n+1)MP kann durch ein ähnliches wie vorher beschriebenes Kriterium für n=1 geleistet werden. Die Grenzwerte der Unterschieds $|\mu\text{-}\nu|$ für beide Zustände werden experimentell bestimmt. Z.B. ist der Dreifachpulszustand mit dem Verhältnis $|\mu\text{-}\nu| \geq 2{,}5$ charakterisiert, wohingegen der Doppelpulszustand mit dem Verhältnis $1{,}5{\leq}|\mu\text{-}\nu|$ definiert ist. Alle möglichen Pulszustände können folglich mittels einer Routine unterschieden werden. Es sei hier nochmals vermerkt, dass die Pulszustandserkennung automatisiert ablaufen kann und keinerlei Beurteilung eines Operators von Nöten ist, wie beispielsweise bei Messungen mit schneller Photodiode und Autokorrelator.

Im Hinblick auf die Detektoren ist es möglich, die Funktionalität des ersten und zweiten Laserdetektor als unterschiedliche Betriebszustände einer Photodiode auszubilden, so dass mit nur einer Photodiode nacheinander mit Ein- und Zwei-Photonen-Absorption gemessen wird, d.h. das erste Signal $\mu$ wird in bekannter Weise und das zweite Signal $\nu$ mittels Zwei- oder Multiphotonen-Absorption gemessen.

Weitere Möglichkeiten der Zwei-Photonen oder Multi-Photonen Detektion bestehen z. B. in der Nutzung von LEDs oder Photowiderständen mit Multi-Photoneneffekt bzw. Si Avalanche Photodioden (APD). Die zugrundeliegenden Ansätze werden beispielsweise in den folgenden Dokumenten beschrieben: Reid D. T. et al, "Light-emitting diodes as measurement devices for femtosecond laser pulses" Optics Letters, Vol. 22, No. 4, 15. Februar 1997, Seiten 233 bis 235, sowie Kikuchi K. "Highly sensitive interferometric autocorrelator using Si avalanche photodiode as two-photon absorber" Electronics Letters, Vol. 34, No. 1, 8. Januar 1998, Seiten 123 bis 125.

Die Antwort dieser Bauteile auf das ankommenden Signal hängt von der Spitzintensität ab: je höher die Intensität, desto grösser das Signal. Eine Messung dieses Signals im Vergleich zur Laserleistung erlaubt ebenfalls eine Bestimmung des Betriebszustands.

Die Messung der Zwei- oder Multi-Photonen-Absorption kann ebenfalls in Transmission, z. B. mit InP als Zwei-Photonenabsorber, erfolgen. Da die Absorption von der Spitzenleistung des Pulses abhängt, genügt es, die transmittierte, d.h. durchgeschaltete Leistung zu messen. Wenn die Leistung hoch ist, befindet sich der Laser im Doppel- bzw. Mehrfachpulszustand DP/MP.

Eine Alternative zur Aufnahme eines zweiten Signals $\nu$ besteht in der Verwendung einer Frequenzvervielfachung, insbesondere -verdoppelung oder -verdreifachung. Solche Vervielfachungsmethoden nutzen Kristalle wie z.B. BBO (Bariumborat), LBO (Lithium-Triborat), PPLN (periodisch gepoltes Lithiumniobat) oder KTP (Kaliumtitanylphosphat). Die Signalverhältnisse bei SP, DP/MP Übergängen entsprechen dabei denen der Zwei-Photonen Absorption. Da beim Doppel- oder Mehrfachpulszustand DP/MP die Spitzintensität geringer ist, wird das Vervielfachungssignal niedriger als im Einzelpulszustand, wobei die Detektion bspw. mit einem Powermeter ausgeführt werden kann. Das Verhältnis zwischen Einzelpulszustand SP und Doppel- oder Mehrfachpulszustand DP/MP ist ¼ bzw. $1/n^2$.

Die Erkennung des Betriebszustandes erlaubt eine Bereitstellung von Verfahren zur Vermeidung von Multipuls-Zuständen und zur Einstellung oder Optimierung des Laser-Arbeitspunktes.

Eine mögliche Kalibrierroutine stellt sich dabei wie folgt dar:

- Der Laser ist temperiert und optimal justiert.
- Zur Bestimmung des Überganges von Einzelpulszustand SP zum Doppel- oder Mehrfachpulszustand DP/MP wird der Laser gezielt in den Doppel- oder Mehrfachpulszustand DP/MP versetzt. Hierzu wird die Pumpleistung bis zum erlaubten Maximum erhöht.
- Beginnend mit dem Doppel- oder Mehrfachpulszustand DP/MP wird nun ein Ausschnitt der Leistungs-Betriebsstrom-Kurve gemessen, indem der Betriebsstrom für die Pumpquelle schrittweise, beispielsweise in 0,5A-Schritten, verringert wird.
- Es werden die MP-DP-SP-Übergänge aufgrund der gemessenen Signale $|\mu\text{-}\nu|$ beobachtet. Nach Feststellung des DP-SP-Überganges kann der für diesen Übergang gefundene Betriebsstrom als Arbeitspunktstrom definiert werden. Dieser Betriebsstromwert bzw. die gemessene Leistung ist der vorerst ermittelte Arbeitspunkt AP.
- Die Stabilität des gefundenen AP kann durch mehrmaliges Ein-Ausschalten verifiziert werden. Es darf bei mehreren Ein-Ausschaltvorgängen (beispielsweise 5-10 Zyklen, jeweils ca. 10 Sekunden) kein Doppel- oder Mehrfachpulszustand DP/MP auftreten.

Bei manchen Soliton-Lasern können die Betriebsparameter, bei welchen der Laser beim Einschalten in den modengekoppelten Betrieb fällt, aus verschiedenen Gründen relativ nahe an, beziehungsweise innerhalb, der SP-DP/MP-Hysterese liegen. In diesem Fall kann beispielsweise eine Stromrampe als Verfahren zum Einschalten des Lasers gewählt werden.

- Der Laser wird mit erhöhtem Strom eingeschaltet. Zusätzlich kann der moden-gekoppelte Betrieb durch eine weitere Parameteränderung (Dispersion, akustische Störung, etc...) angeregt werden. Dies versetzt ihn in den modengekoppelten Doppel- oder Mehrfachpulszustand DP/MP. Der erhöhte Betriebsstrom wird für einige Sekunden gehalten.
- Danach wird der Betriebsstrom langsam auf einen Wert erniedrigt, welcher unterhalb des DP-SP-Übergangs liegt, was den Laser in den modengekoppelten Einpulszustand SP versetzt. Der erniedrigte Betriebsstrom wird für einige Sekunden gehalten.
- Danach wird der Betriebsstrom wiederum langsam auf den Nennwert gebracht, welcher u. U. innerhalb der SP-DP/MP-Hysterese liegen kann.

Fig.4 zeigt die schematische Darstellung einer einfachen Verstärkerschaltung zur Zwei-Photonen-Detektion mit zwei 100kΩ-Widerständen 4, einem 1 MΩ-Widerstand 5, drei 470pF-Kondensatoren 6, einer Hamamatsu G1116 GaAsP-Photodiode 7 und einem Operationsverstärker 8, wobei VCC die Versorgungsspannung bezeichnet.

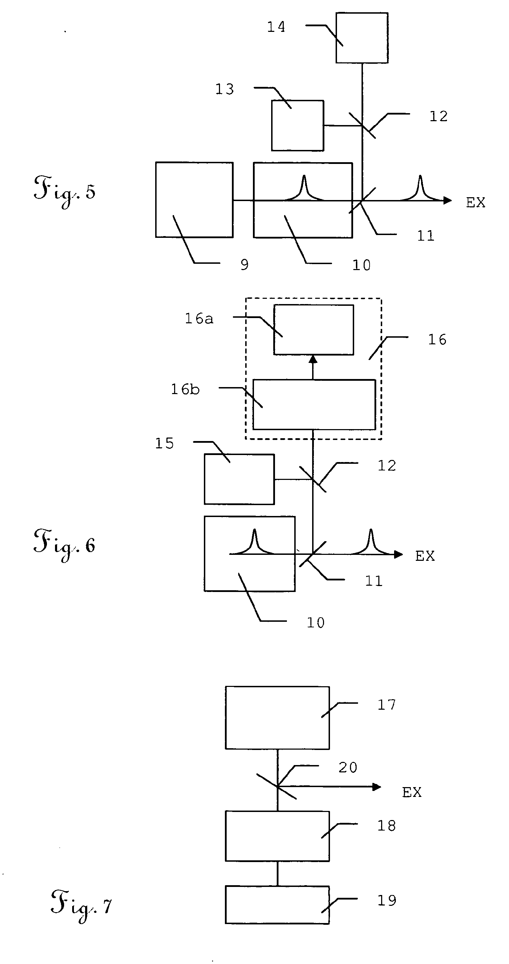

In Fig.5 wird eine erste Ausführungsform einer erfindungsgemässen Anordnung mit zwei Laserdetektoren näher erläutert, wie sie beispielsweise mit bzw. in einem im Solitonenregime betreibbaren Ultrakurzpulslasersystem zur Erzeugung von Femto- oder Pikosekundenpulsen verwendet werden kann. Solche Lasersysteme weisen einen Oszillator 10 als Laserresonator mit mindestens einem Resonatorspiegel, einem verstärkenden Lasermedium zur Erzeugung einer Laseremission und mit einer zugeordneten Pumpquelle 9, insbesondere eine Laserdiodenquelle, zum Pumpen des Lasermediums auf. Über einen Umlenkspiegel 11, der inner- oder ausserhalb des Oszillators 10 bzw. der Kavität angeordnet sein kann, wird Laserlicht ausgekoppelt und auf einen Teilerspiegel 12 geführt. Hierbei bezeichnet EX den Ausgang des Lasersystems. Dem Teilerspiegel sind ein erster Laserdetektor 13 und ein zweiter Laserdetektor 14 nachgeordnet, wobei der erste Laserdetektor 13 zur Messung von Pulsdurchschnittsleistung oder Pulsenergie für einen oder mehrere Pulse ausgelegt ist. Der erste Laserdetektor 13 kann dabei eine im Ein-Photon-Absorptions-Regime betriebene Photodiode sein.

Der zweite Laserdetektor 14 ist zur Messung von Pulsspitzenleistung oder Pulsspitzenintensität für einen oder mehrere Pulse ausgebildet, wobei hier eine Auswertekomponente zur Erkennung des Auftretens eines Doppel- oder Mehrfachpulszustands (DP/MP) anhand eines Vergleichs der gemessenen Signale von erstem und zweitem Laserdetektor aus Anschaulichkeitsgründen nicht dargestellt ist. Der zweite Laserdetektor 14 kann als eine im Zwei- oder Multiphotonen-Absorptions-Regime betriebene Photodiode realisiert werden.

Eine Verwendung von Ein- und Multiphotonen-Absorptions-Regimes erlaubt auch die Realisierung der Funktionalität von zwei getrennten Laserdetektoren durch verschiedene Modi, d.h. der erste und zweite Laserdetektor 13,14 werden durch bzw. als unterschiedliche Betriebszustände einer Photodiode verwirklicht.

Der zweite Laserdetektor 14 kann jedoch auch eine LED oder ein Photowiderstand mit Zwei- oder Multi-Photoneneffekt sein oder mit InP zur 2-Photonen Absorption in Transmission versehen werden.

Eine zweite Ausführungsform einer erfindungsgemässen Anordnung mit zwei Laserdetektoren wird in Fig.6 dargestellt. Nach Auskopplung aus dem Oszillator 10 über einen Umlenkspiegel 11 wird das Laserlicht durch einen Teilerspiegel 12 auf einen Leistungsmesser 15 als ersten Detektor und einen Leistungsmesser 16a mit einer Komponente 16b zur Frequenzverdopplung oder Frequenzvervielfachung geführt, die somit in dieser Kombination den zweiten Detektor 16 bilden. Zur Realisierung der spezifischen Funktionalität des zweiten Laserdetektors 16 wird damit vor einen grundsätzlich mit dem Leistungsmesser 15 als erstem Detektor identisch bzw. gleichartig auslegbaren Leistungsmesser 16a eine zusätzliche funktionale Komponente 16b geschaltet, z.B. wenigstens ein BBO-, LBO-, PPLN- oder KTP-Kristall.

Weitere Detektorkonzepte zur Erkennung von Doppel- oder Mehrfachpulszustände können mit dem erfindungsgemässen Ansatz mit zwei Detektoren kombiniert werden bzw. diese ergänzen oder diese unter Umständen ersetzen. Diese werden in den Fig.7 bis 9a-b erläutert. Dabei sind sie jedoch grundsätzlich unabhängig vom erfindungsgemässen Zwei-Detektor-Ansatz.

Fig.7 zeigt hierbei eine erste alternative oder ergänzende Ausführungsform zur erfindungsgemässen Anordnung mit einem sättigbarem Absorber 18. Aus dem Lasersystem 17 wird Laserlicht über einen Umlenkspiegel 20 zum Ausgang EX geführt. Der strahlteilend ausgelegte Umlenkspiegel lässt einen Teil des Lichts über einen sättigbaren Absorber 18 auf einen Laserdetektor 19 fallen. Dieser misst die Transmission durch den schnellen sättigbaren Absorber 18, wobei dieser beispielsweise einen Quantum-Well-Absorber, darstellen bzw. aufweisen kann, wie z.B. InGaAs zwischen GaAs oder anderen Materien mit geeigneten Energielücken. Dieser zeigt ein intensitätsabhängiges Sättigungsverhalten, so daß ebenfalls eine Differenzierung der unterschiedlichen Pulszustände realisierbar ist. Das sättigbare Material absorbiert die ankommende Energie und lässt bei erfolgter Sättigung die Pulse durch. Dabei hängt die Sättigung von der Pulsdauer und der Pulsintensität ab. Die geeignete Wahl des sättigbaren Absorbers ermöglicht es, die Pulse im Einzelpulszustand SP stärker durchzulassen und im Doppel- bzw. Mehrfachpulszustand DP/MP eher zu blockieren, so dass anhand der durchgelassenen Leistung der Betriebszustand des Lasers bestimmt werden kann. Wie die folgende Rechnung zeigt, ist dabei der Signalkontrast zwischen beiden Zuständen im nicht gesättigten Betrieb des sättigbaren Materials grösser als im gesättigten Betrieb.

Die intensitätsabhängige Transmission kann wie folgt geschrieben werden

$$T(I) = 1 - \frac{A_0}{1 + \dfrac{I}{I_{Sat}}} \qquad (6)$$

wobei $I_{Sat}$ die Sättigungsintensität und $A_0$ das Absorptionsvermögen bezeichnen. Für den gesättigten Zustand mit $I = I_{Sat}$ und $A_0 = 1$ folgen

$$T(I_{SP}) = 0,5$$

$$T(I_{DP}) = 2 \cdot T(I_{SP}/4) = 0,4$$

$$T(I_{SP})/T(I_{DP}) = 1,25$$

wohingegen für einen ungesättigten Zustand mit $I = 0,1\ I_{Sat}$ und $A_0 = 1$ ein im Vergleich höherer Signalkontrast $T(I_{SP})/T(I_{DP})$ folgt

$$T(I_{SP}) = 0,091$$

$$T(I_{DP}) = 2 \cdot T(I_{SP}/4) = 0,049$$

$$T(I_{SP})/T(I_{DP}) = 1,86$$

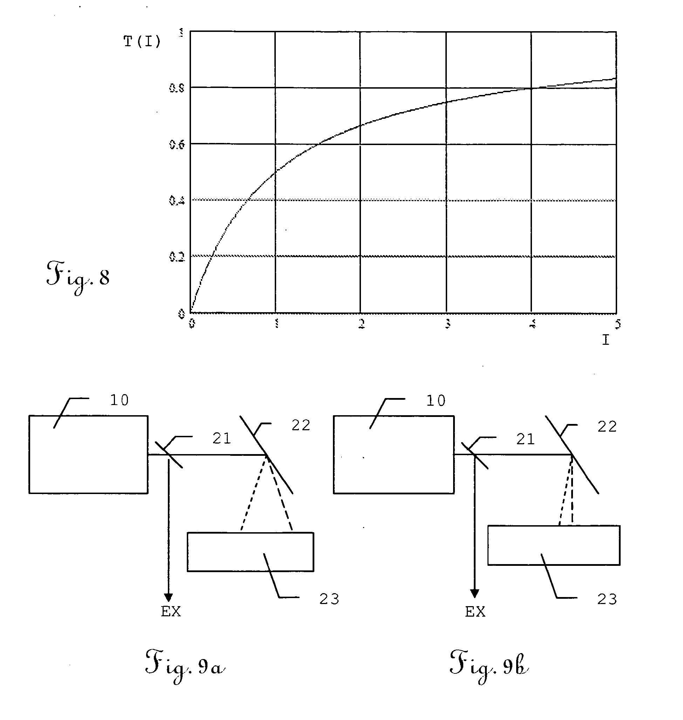

Fig.8 zeigt beispielhaft den Verlauf der Transmission T(I) durch einen schnellen sättigbaren Absorber in Abhängigkeit von der normierten Intensität $I/I_{sat}$ vor dem Absorber.

Eine zweite alternative oder ergänzende Ausführungsform zur erfindungsgemässen Anordnung mit spektraler Pulsanalyse wird in Fig.9a-b schematisch näher erläutert. Diese weitere Alternative zur Erkennung des Pulszustands besteht in der Verwendung der spektralen Auflösung der Pulse. Im Doppel- oder Mehrfachzustand DP/MP ist der Puls zeitlich länger, aber auf der anderen Seite ist seine spektrale Bandbreite geringer als im Einzelpulszustand SP. Der Vergleich der spektralen Bandbreiten mit z.B. einem Spektrometer erlaubt, den Laserzustand zu bestimmen. Um Doppeldeutigkeiten zu vermeiden, ist es möglich, auch die Laserleistung zu messen und beide Messungen auszuwerten. Beispielsweise kann der aus dem Oszillator 10 über einen Auskoppelspiegel 21 stammende Puls auf ein nachfolgendes Gitter 22 geführt und der Puls räumlich zerlegt werden. Danach erlaubt beispielsweise eine CMOS- oder CCD-Kamera 23 oder einem anderer optischer Detektor die Aufnahme des entstandenen Flecks. Anhand der Fleckgrösse oder mittels einer Apertur und einem Leistungsmessgerät können dann die SP und DP Zustände unterschieden werden. Der Fall des Einzelpulszustands SP mit breiterem Spektrum bzw. Fleck ist dabei in Fig.9a und der Fall des Doppel- oder Mehrfachzustand DP/MP mit demgegenüber schmalerem Spektrum bzw. Fleck in Fig.9b dargestellt.

Es versteht sich, dass die gezeigten Anordnungen rein beispielhafte Ausführungsformen darstellen und Komponenten auch an anderer Stelle angeordnet sein oder auch je nach konkreter Auslegung auch weggelassen werden können, wie z.B. Teiler- oder Auskoppelspiegel. Auch können die in Fig.7 bis 9a-b dargestellten Ausführungsformen auch als zweiter Detektor mit einem ersten Detektor des erfindungsgemässen Ansatzes kombiniert werden.

**Patentansprüche**

1. Erkennungsverfahren für unerwünschte Doppel- oder Mehrfachpulszustände (DP/MP) in einem Ultrakurzpulslasersystem zur Erzeugung von Femto- oder Pikosekundenpulsen mit mindestens

   • einem verstärkenden Lasermedium zur Erzeugung einer Laseremission,
   • einem Laserresonator (10) mit mindestens einem Resonatorspiegel und
   • einer Pumpquelle (9), insbesondere eine Laserdiodenquelle, zum Pumpen des Lasermediums,

   wobei das Ultrakurzpulslasersystem im Solitonenregime betrieben und für die Laseremission
   ein der über den Resonatorumlauf gemittelten Pulsleistung P(t) proportionales erstes Signal $\mu$ gemessen wird,
   **dadurch gekennzeichnet, dass**
   für die Laseremission ein dem über den Resonatorumlauf gemittelten Quadrat der Pulsleistung P(t) proportionales zweites Signal $\nu$ gemessen wird und der Übergang von einem Einzelpulszustand (SP) zum unerwünschten Doppel-oder Mehrfachpulszustand (DP/MP) anhand eines Vergleichs der gemessenen und im Bereich von Resonatorum-laufzeiten unabhängigen Signale $\mu$ und $\nu$ bestimmt wird, wobei

   - bei einem Verhältnis von $|\mu - \nu| \leq 1$ auf einen Einzelpulszustand (SP) geschlossen wird, und/oder
   - bei einem Verhältnis von $|\mu - \nu| \geq 1.5$ auf einen Doppel- oder Mehrfachpulszustand (DP/MP) geschlossen wird, und

   wobei beide Signale $\mu$ und $\nu$ in einem Zustand mit definierter Einzelpulscharakteristik so kalibriert werden, daß sie sich im wesentlichen entsprechen.

2. Erkennungsverfahren nach Anspruch 1,
   **dadurch gekennzeichnet, daß**
   das erste Signal $\mu$ mittels Ein-Photon-Absorption gemessen wird.

3. Erkennungsverfahren nach Anspruch 1 oder 2,
   **dadurch gekennzeichnet, daß**
   das zweite Signal $\nu$ mittels Zwei- oder Multiphotonen-Absorption gemessen wird.

4. Erkennungsverfahren nach Anspruch 1 oder 2,
   **dadurch gekennzeichnet, daß**
   das zweite Signal $\nu$ unter Verwendung einer Frequenzvervielfachung, insbesondere -verdoppelung oder -verdreifachung, gemessen wird.

5. Verfahren zur Vermeidung von Doppel- oder Mehrfachpulszuständen (DP/MP) und Optimierung des Laser-Arbeitspunktes (AP) mit einem Erkennungsverfahren nach einem der vorangehenden Ansprüche,
   **gekennzeichnet durch**

   ◦ ein Versetzen des Ultrakurzpulslasersystems in den Doppel- oder Mehrfachpulszustand (DP/MP),
   ◦ ein Verringern des Betriebsstroms für die Pumpquelle zur Ableitung der Abhängigkeit der Signale $\mu$ und $\nu$ vom Betriebsstrom,
   ◦ ein Bestimmen des Betriebsstromwertes für den Übergang vom Doppel- oder Mehrfachpulszustands (DP/MP) in den Einzelpulszustand (SP).

6. Verfahren nach Anspruch 5,
   **dadurch gekennzeichnet, daß**
   nach dem Verringern des Betriebsstroms ein Erhöhen bis zu einem Arbeitspunktstrom erfolgt.

7. Messvorrichtung zur Erkennung von Doppel- oder Mehrfachpulszustände (DP/MP) in einem im Solitonenregime betreibbaren Ultrakurzpulslasersystem zur Erzeugung von Femto- oder Pikosekundenpulsen; mit mindestens einem ersten Laserdetektor (13,15), wobei dieser erste Laserdetektor (13,15) so ausgebildet und angeordnet ist, dass ein zur über den Resonatorumlauf gemittelten Pulsleistung P(t) proportionales Signal für einen oder mehrere Pulse messbar ist,
   **gekennzeichnet durch**
   einen zweiten Laserdetektor (14,16), wobei dieser zweite Laserdetektor (14,16) so ausgebildet und angeordnet ist, dass ein zur über den Resonatorumlauf gemittelten Quadrat der Pulsleistung P(t) proportionales Signal für einen oder mehrere Pulse messbar ist, und eine Auswertekomponente so ausgebildet und angeordnet ist, dass der Übergang vom Einzelpulszustand (SP)zu einem Doppel- oder Mehrfachpulszustand (DP/MP) anhand eines Vergleichs der gemessenen Signale von erstem und zweitem Laserdetektor (13,14,15,16) bestimmbar ist, wobei

- bei einem Verhältnis von $|\mu - \nu| \leq 1$ auf einen Einzelpulszustand (SP) geschlossen wird, und/oder
- bei einem Verhältnis von $|\mu - \nu| \geq 1.5$ auf einen Doppel- oder Mehrfachpulszustand (DP/MP) geschlossen wird, und

wobei beide Signale $\mu$ und $\nu$ in einem Zustand mit definierter Einzelpulscharakteristik so kalibriert werden, daß sie sich im wesentlichen entsprechen.

8. Messvorrichtung nach Anspruch 7,
   **dadurch gekennzeichnet, dass**
   der erste Laserdetektor (13,15) eine im Ein-Photon-Absorptions-Regime betriebene Photodiode ist.

9. Messvorrichtung nach Anspruch 7 oder 8,
   **dadurch gekennzeichnet, dass**
   der zweite Laserdetektor (14,16) eine im Zwei- oder Multiphotonen-Absorptions-Regime betriebene Photodiode (7) ist.

10. Messvorrichtung nach Anspruch 8 und 9,
    **dadurch gekennzeichnet, dass**
    der erste und zweite Laserdetektor als unterschiedliche Betriebszustände einer Photodiode ausgebildet sind.

11. Messvorrichtung nach Anspruch 7 oder 8,
    **dadurch gekennzeichnet, dass**
    der zweite Laserdetektor (14) eine LED oder ein Photowiderstand mit Zwei- oder Multi-Photoneneffekt ist oder InP zur 2-Photonen Absorption in Transmission aufweist.

12. Messvorrichtung nach Anspruch 7 oder 8,
    **dadurch gekennzeichnet, dass**
    der zweite Laserdetektor (16) wenigstens einen BBO-, LBO-, PPLN- oder KTP-Kristall zur Frequenzvervielfachung aufweist.

13. Ultrakurzpulslasersystem zur Erzeugung von Femto- oder Pikosekundenpulsen mit mindestens

    • einem verstärkenden Lasermedium zur Erzeugung einer Laseremission,
    • einem Laserresonator (10) mit mindestens einem Resonatorspiegel,
    • einer Pumpquelle (9), insbesondere eine Laserdiodenquelle, zum Pumpen des Lasermediums und
    • einer Messvorrichtung nach einem der Ansprüche 8 bis 12.

**Claims**

1. Recognition method for unwanted double or multiple pulse states (DP/MP) in an ultrashort pulse laser system for producing femtosecond or picosecond laser pulses, comprising at least

   • an amplifying laser medium for producing a laser emission,
   • a laser resonator (10) with at least one resonator mirror and
   • a pump source (9), in particular a laser diode source, for pumping the laser medium,

   wherein the ultrashort pulse laser system is operated in the soliton regime and a first signal $\mu$, proportional to the pulse power P(t) averaged over the resonator round-trip, is measured for the laser emission,
   **characterized in that**
   a second signal $\nu$, proportional to the square of the pulse power P(t) averaged over the resonator round-trip, is measured for the laser emission and the transition from a single pulse state (SP) to the unwanted double or multiple pulse state (DP/MP) is determined on the basis of a comparison of the measured signals $\mu$ and $\nu$ which are inde-

pendent in the region of resonator round-trip times, wherein

- a single pulse state (SP) is deduced in the case of a relationship of $|\mu - \nu| \leq 1$, and/or
- a double or multiple pulse state (DP/MP) is deduced in the case of a relationship of $|\mu - \nu| \geq 1.5$, and

wherein both signals $\mu$ and $\nu$ are calibrated in a state with a defined single pulse characteristic such that they substantially correspond to one another.

**2.** Recognition method according to Claim 1,
**characterized in that**
the first signal $\mu$ is measured by means of single photon absorption.

**3.** Recognition method according to Claim 1 or 2,
**characterized in that**
the second signal $\nu$ is measured by means of two photon or multi-photon absorption.

**4.** Recognition method according to Claim 1 or 2,
**characterized in that**
the second signal $\nu$ is measured using frequency multiplication, in particular frequency doubling or frequency tripling.

**5.** Method for avoiding double or multiple pulse states (DP/MP) and optimizing the laser operating point (AP) with a recognition method according to any one of the preceding claims,
**characterized by**

∘ putting the ultrashort pulse laser system into the double or multiple pulse state (DP/MP),
∘ reducing the operating current for the pump source for deriving the dependence of the signals $\mu$ and $\nu$ on the operating current,
∘ determining the operating current value for the transition from the double or multiple pulse state (DP/MP) into the single pulse state (SP).

**6.** Method according to Claim 5,
**characterized in that**,
after the operating current is reduced, there is an increase up to an operating point current.

**7.** Measuring device for recognizing double or multiple pulse states (DP/MP) in an ultrashort pulse laser system, operable in the soliton regime, for producing femtosecond or picosecond pulses; comprising at least one first laser detector (13, 15), wherein this first laser detector (13, 15) is embodied and arranged in such a way that a signal proportional to the pulse power P(t) averaged over the resonator round-trip is measurable for one or more pulses,
**characterized by**
a second laser detector (14, 16), wherein this second laser detector (14, 16) is embodied and arranged in such a way that a signal proportional to the square of the pulse power P(t) averaged over the resonator round-trip is measurable for one or more pulses, and an evaluation component is embodied and arranged in such a way that the transition from the single pulse state (SP) to a double or multiple pulse state (DP/MP) is determinable on the basis of a comparison of the measured signals from the first and the second laser detector (13, 14, 15, 16), wherein

- a single pulse state (SP) is deduced in the case of a relationship of $|\mu - \nu| \leq 1$, and/or
- a double or multiple pulse state (DP/MP) is deduced in the case of a relationship of $|\mu - \nu| \geq 1.5$, and

wherein both signals $\mu$ and $\nu$ are calibrated in a state with a defined single pulse characteristic such that they substantially correspond to one another.

**8.** Measuring device according to Claim 7,
**characterized in that**
the first laser detector (13, 15) is a photodiode operated in the single photon absorption regime.

**9.** Measuring device according to Claim 7 or 8,
**characterized in that**
the second laser detector (14, 16) is a photodiode (7) operated in the two photon or multi-photon absorption regime.

**10.** Measuring device according to Claim 8 and 9,
**characterized in that**
the first and second laser detectors are embodied as different operating states of a photodiode.

**11.** Measuring device according to Claim 7 or 8,
**characterized in that**
the second laser detector (14) is an LED or a photoresistor with two photon or multi-photon effect or comprises InP for 2-photon absorption in transmission.

**12.** Measuring device according to Claim 7 or 8,
**characterized in that**
the second laser detector (16) has at least one BBO crystal, LBO crystal, PPLN crystal or KTP crystal for frequency multiplication.

**13.** Ultrashort pulse laser system for producing femtosecond or picosecond pulses, comprising at least

• an amplifying laser medium for producing a laser emission,
• a laser resonator (10) with at least one resonator mirror,
• a pump source (9), in particular a laser diode source, for pumping the laser medium and
• a measuring device according to any one of Claims 8 to 12.

## Revendications

**1.** Procédé de reconnaissance pour des états d'impulsions doubles ou multiples (DP/MP) non souhaités dans un système laser à impulsions ultracourtes pour générer des impulsions femtosecondes ou picosecondes avec au moins

• un milieu laser amplificateur pour générer une émission laser,
• un résonateur laser (10) avec au moins un miroir de résonateur et
• une source de pompage (9), en particulier une source de diodes laser, pour pomper le milieu laser,

cependant que le système laser à impulsions ultracourtes fonctionne en régime soliton et un premier signal ll, proportionnel à la puissance de l'impulsion P(t) déterminée par la rotation du résonateur, est mesuré pour l'émission laser, **caractérisé en ce qu'**un second signal $\nu$, proportionnel au carré de la puissance d'impulsion P(t) déterminée par la rotation du résonateur, est mesuré pour l'émission laser et la transition d'un état d'impulsion unique (SP) à un état d'impulsions doubles ou multiples (DP/MP) non souhaité est déterminée à l'aide d'une comparaison des signaux $\mu$ et $\nu$ mesurés et indépendants dans la plage des temps de rotation du résonateur, cependant que

- l'on conclue un état d'impulsion unique (SP) pour un rapport de $|\mu\text{-}\nu| \leq 1$ et/ou
- l'on conclue un état d'impulsions doubles ou multiples (DP/MP) pour un rapport $|\mu\text{-}\nu| \geq 1.5$ et

cependant que les deux signaux $\mu$ et $\nu$ sont calibrés dans un état avec une caractéristique définie d'impulsion unique de telle manière qu'ils se correspondent substantiellement.

**2.** Procédé de reconnaissance selon la revendication 1, **caractérisé en ce que** le premier signal $\mu$ est mesuré par absorption d'un photon.

**3.** Procédé de reconnaissance selon la revendication 1 ou 2, **caractérisé en ce que** le second signal $\nu$ est mesuré par absorption de deux photons ou multiphotons.

**4.** Procédé de reconnaissance selon la revendication 1 ou 2, **caractérisé en ce que** le second signal $\nu$ est mesuré en utilisant une multiplication de fréquence, en particulier un doublement ou un triplement de fréquence.

**5.** Procédé pour éviter des états d'impulsions doubles ou d'impulsions multiples (DP/MP) et pour l'optimisation d'un point de travail laser (AP) avec un procédé de reconnaissance selon l'une des revendications précédentes, **caractérisé par**

◦ un déplacement du système laser à impulsions ultracourtes dans l'état d'impulsions doubles ou multiples (DP/MP),

◦ une réduction du courant de fonctionnement pour la source de pompage pour dériver la dépendance des signaux $\mu$ et $v$ du courant de fonctionnement,

◦ une détermination de la valeur du courant de fonctionnement pour la transition de l'état d'impulsions doubles ou multiples (DP/MP) à l'état d'impulsion unique (SP).

6. Procédé selon la revendication 5, **caractérisé en ce qu'**une augmentation jusqu'à un courant de point de travail se fait après la réduction du courant de fonctionnement.

7. Dispositif de mesure pour la reconnaissance d'états d'impulsions doubles ou multiples (DP/MP) dans un système laser à impulsions ultracourtes qui peut fonctionner en régime soliton pour générer des impulsions femtosecondes ou picosecondes avec au moins un premier détecteur laser (13, 15), cependant que ce premier détecteur laser (13, 15) est configuré et placé tel qu'un signal proportionnel à la puissance de l'impulsion déterminée par la rotation du résonateur peut être mesuré pour une ou plusieurs impulsions,

**caractérisé par**

un second détecteur laser (14, 16), cependant que ce second détecteur laser (14, 16) est configuré et placé de telle manière qu'un signal proportionnel à la puissance de l'impulsion déterminée par la rotation du résonateur peut être mesuré pour une ou plusieurs impulsions, et un composant d'évaluation est configuré et placé tel que la transition de l'état d'impulsion unique (SP) à un état de doubles impulsions ou d'impulsions multiples (DP/MP) peut être déterminée à l'aide d'une comparaison des signaux mesurés par le premier et le second détecteur laser (13, 14, 15, 16), cependant que

- l'on conclue un état d'impulsion unique (SP) pour un rapport de $|\mu\text{-}v| \leq 1$ et/ou
- l'on conclue un état d'impulsion doubles ou multiples (DP/MP) pour un rapport $[\mu\text{-}v| \geq 1.5$ et

cependant que les deux signaux $\mu$ et $v$ sont calibrés dans un état avec une caractéristique définie d'impulsion unique de telle manière qu'ils se correspondent substantiellement.

8. Dispositif de mesure selon la revendication 7, **caractérisé en ce que** le premier détecteur laser (13, 15) est une photodiode qui fonctionne en régime d'absorption d'un photon.

9. Dispositif de mesure selon la revendication 7 ou 8, **caractérisé en ce que** le second détecteur laser (14, 16) est une photodiode qui fonctionne en régime d'absorption de deux photons ou multiphotons.

10. Dispositif de mesure selon la revendication 8 ou 9, **caractérisé en ce que** le premier et le second détecteur laser sont configurés comme différents états de fonctionnement d'une photodiode.

11. Dispositif de mesure selon la revendication 7 ou 8, **caractérisé en ce que** le second détecteur laser (14) présente une DEL ou une résistance photo avec effet à deux photons ou multiphotons ou InP pour l'absorption de deux photons en transmission.

12. Dispositif de mesure selon la revendication 7 ou 8, **caractérisé en ce que** le second détecteur laser (16) présente au moins un cristal BBO, LBO, PPLN ou KTP pour multiplication de fréquence.

13. Système laser à impulsions ultracourtes pour générer des impulsions femtosecondes ou picosecondes avec au moins

• un milieu laser amplificateur pour générer une émission laser,
• un résonateur laser (10) avec au moins un miroir de résonateur et
• une source de pompage (9), en particulier une source de diodes laser, pour pomper le milieu laser et
• un dispositif de mesure selon l'une des revendications 8 à 12.

Fig. 1

Fig. 2

$\mathcal{F}ig.\ 3$

$\mathcal{F}ig.\ 4$

Fig. 5

Fig. 6

Fig. 7

Fig. 8

Fig. 9a

Fig. 9b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6693927 B1
- US 20030138006 A1

**In der Beschreibung aufgeführte Nicht-Patentliteratur**

- *J. Opt. Soc. Am.,* 1999, vol. 16, 895-904
- **BEISPIEL IN LAI M. et al.** Multiple pulse operation of a femtosecond Ti:sapphire laser. *Optics Communications,* 01. Oktober 1997, vol. 142 (1-3), 45-49
- **BUIJSERD A. N. et al.** CPM laser with electronic feedback. *Measurement Science and Technology,* 01. August 1990, vol. 1 (8), 751-753
- **RICCARDO BRUZZESE et al.** Experimental investigation of macropulse fluctuations in a picosecond neodymium-doped yttrium aluminium garnet laser. *J. Phys. D: Appl. Phys.,* 1988, vol. 21, 1710-1712
- **G. P. AGRAWAL.** Nonlinear Fiber Optics. Academic Press, 1989, 114
- **R. L. SUTHERLAND.** Handbook of Nonlinear Optics. Marcel Dekker, 1996, 498
- **REID D. T. et al.** Light-emitting diodes as measurement devices for femtosecond laser pulses. *Optics Letters,* 15. Februar 1997, vol. 22 (4), 233-235
- **KIKUCHI K.** Highly sensitive interferometric autocorrelator using Si avalanche photodiode as two-photon absorber. *Electronics Letters,* 08. Januar 1998, vol. 34 (1), 123-125